# EUROPEAN PATENT APPLICATION

(11) **EP 1 253 557 A1**
(43) Date of publication of application: **30.10.2002**
(21) Application number: 02003924.4
(22) Date of filing: 21.02.2002
(51) Int. Cl.: G06T 5/40, G06T 5/50, H04N 5/32

(54) **Apparatus for and method of generating an enhanced contrast information digital image**

(30) Priority: 24.04.2001 SE 0101421
(71) Applicant: Siemens-Elema AB, 171 95 Solna (SE)
(72) Inventor: Goldkuhl, Fredrik, 112 62 Stockholm (SE); Kövamees, Peter, 178 92 Adelsö (SE); Thunberg, Stefan, 181 41 Lidingö (SE)

(57) **Abstract**

A digital x-ray imaging system (2) comprises a digital image generator having an x-ray source (4) for illuminating a subject (8) with a radiation beam (6) and a data acquisition system (12,14,16) located to detect the illuminating radiation after its interaction with the subject (8) to generate an image of the subject (8) and to output a digital data set representing the image. A digital image processor (18,20), which may be part of a programmable computer (22), is connected to the digital image generator (4,12,14,16) to receive a first and the second digital data set representing images taken at respectively a first and a second, different exposure level. The processor (18,20) is configured to generate a third digital data set which when reconstructed provides an enhanced contrast information digital image and comprises data extracted from each of the first and the second digital data sets selected as representing regions of different radiation absorbency of the subject (8) dependent on the respective first and second exposure levels.

## Description

The present invention relates to an apparatus for and a method of generating an enhanced contrast information digital image and in particular to an apparatus and method for generating a digital mammographic image having enhanced image contrast information.

Inspection systems, such as medical imaging systems like x-ray mammography systems, which produce an image of a subject for visual diagnostic purposes are increasingly using digital imaging techniques. A digital image acquisition system replaces the optical film system and produces a digital data set which when reconstructed reproduces the image on a display device such as a film sheet or a display screen. However, the electronic cameras, such as those based upon digital detector arrays, which are employed in such acquisition systems may have a digital output of limited dynamic range. Whilst a charge coupled device (CCD) detector array may have a dynamic range of several thousand an analogue to digital converter used to digitise the image information may have a dynamic range of about half of this value (a 16-bit converter being able to produce only 1024 grey levels). Therefore, if the subject to be imaged comprises portions having highly disparate attenuation or reflection responses to the illuminating radiation then areas of the digital image may become over or under exposed.

For example, in order to produce a transmission image with sufficient contrast information of a portion of the subject which has a relatively high radiation attenuation relatively high exposure levels are needed. However, at these levels areas of the transmission image corresponding to portions of the imaged subject having a lower radiation attenuation may become over exposed and important contrast information may be lost in the corresponding regions of the transmission image of these portions.

This is particularly a problem in x-ray imaging systems, such as transmission x-ray mammography systems, which are employed to image regions of a patient and where the lost image contrast information could assist in providing a more complete diagnosis. Generally, x-ray attenuation properties of material varies within an imaged region of the patient, for example the necessity to compress the breast in mammography systems leads to thickness variations which result in x-rays being less attenuated towards the periphery of the breast. In order to produce a transmission image of the higher x-ray attenuating material (for example the thicker part of the breast) the region to be imaged must be illuminated with an x-ray beam having a sufficient dose (high exposure level) to enable contrast information of that region to be viewed when the digitised image data set is reconstructed to provide a visible image. Unfortunately, because of the limitation in dynamic range of the electronic camera, the lesser x-ray attenuating material (for example the periphery of the breast) produces a very high intensity region which is indistinguishable from the background when the digitised image data set is reconstructed.

It is an aim of the present invention to provide a method and a system for generating a digital data set which when reconstructed provides an enhanced information image having improved contrast information and so effectively enhancing the dynamic range of the electronic camera used in the digital image acquisition system.

This is achieved by a method according to a first aspect of the invention as claimed in and characterised by the present Claim 1. By generating a plurality of digital data sets, representing images of a subject obtained at different exposure levels then data from each data set which, for each data set, is representative of regions having adequate contrast information can be extracted. A single digital data set comprising a combination of the extracted data can then be produced which when reconstructed can provide an image on a display device such as a film or display screen having adequate contrast information over an extended region of the originally imaged subject as compared with any of the originally generated data sets.

Images at the different exposure levels may be obtained by either generating the digital data sets at different times throughout a single illumination period of the subject or preferably by generating the data sets during separate illuminations of the subject with illuminating beams of different beam fluxes but same energy. Usefully, in the latter case, one of the beam fluxes, preferably the smallest, may be used for generating an automatic exposure control signal for use to control a radiation source to provide the other, preferably larger, beam fluxes.

Usefully, the method may be employed in the generation of an enhanced information transmission x-ray image of a region of a patient's breast showing enhanced contrast information from two digital data sets.

According to a second aspect of the present invention there is provided a computer software product comprising a program code portion which when run on a computer system causes the system to operate according to the method of the first aspect of the present invention. Thus the manipulation of the generated data sets to produce a digital data set representing an enhanced contrast information digital image may be carried out on a "stand alone" computer system running the program code portion.

According to a third aspect of the present invention there is provided a digital imaging system, such as a transmission x-ray mammography system, configured to operate according to the method of the first aspect of the present invention to produce from a plurality of generated digital data sets a digital data set which, when reconstructed, can provide on, for example, a display screen, an enhanced contrast information image, such as a transmission x-ray image of a patient's breast.

Exemplary embodiments of the present invention will now be described with reference to the drawings of the accompanying figures, of which:
Fig. 1 shows a schematic representation of a digital imaging system according to the present invention.
Fig. 2 shows a flow chart of the methodology of the present invention implemented in the digital imaging system of Fig. 1
Figs. 3 (a) to (d) illustrate graphically images obtained according to the methodology shown in Fig. 2.
Fig. 4 shows images corresponding to the graphical representations at Figs. 3(a)(i),(ii) and (d) respectively.

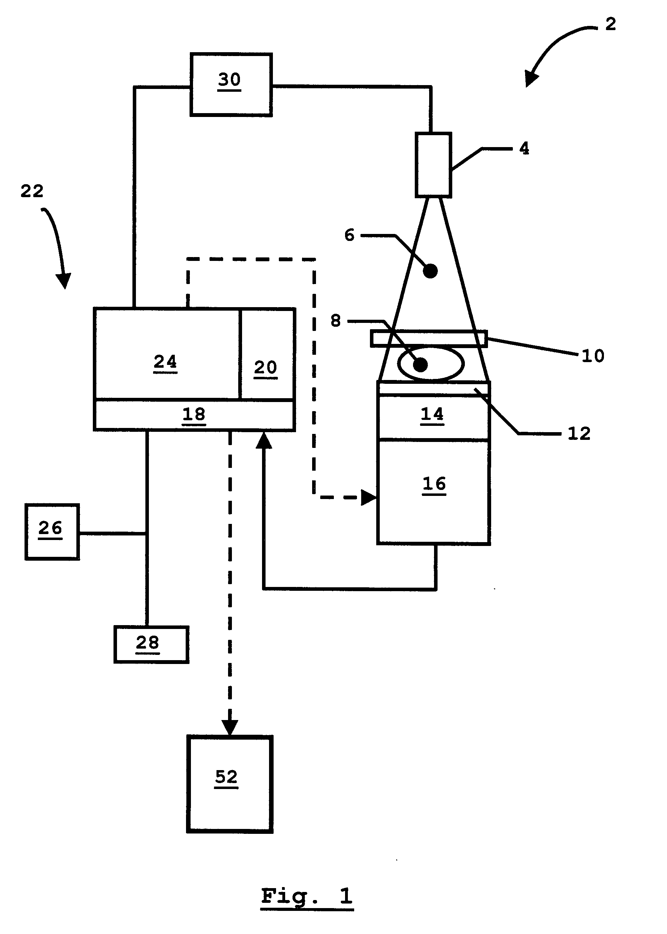

Considering now Fig. 1 a digital imaging system 2 is shown configured for use as a transmission x-ray mammography system. The imaging system 2 comprises a source of illuminating radiation in the form of an x-ray tube 4 which produces an x-ray beam 6 to illuminate a subject breast 8 which is compressed by a compression plate 10 against an imaging surface 12 of a complementary digital radiation detector 14. The digital radiation detector 14 is disposed with respect to the tube 4 so as to collect radiation after the beam 6 has interacted (here shown as transmitted through, but may be reflected or scattered from) with the breast 8.

The digital detector 14 is of a known type, for example such as based on a CCD, amorphous silicon or amorphous selenium detector array, and is adapted to produce an output representative of the spatial intensity distribution of incident radiation after exposure of the breast 8 to the x-ray beam 6. A sampling unit 16 is operably connected to sample the output from the detector 14 and to generate a digital data set representing the intensity of incident radiation indexed with its spatial location at the detector imaging surface 12. The sampling unit 16 outputs the generated data set to a memory 18 which is accessible by an image processing unit 20. The memory 18 and unit 20 together functionally represent a digital image processor and are here shown as part of a suitably programmed computer system 22.

The computer system 22 is further programmed as a control unit 24 which is configured to drive a display screen 26 and to respond to user input provided via a user interface 28, such as a conventional computer keyboard. The control unit 24 provides an output signal to a power supply 30 which is responsive to the output signal to vary the power supplied to the x-ray tube 4 to control the total flux (that is the so-called "milli-amp second (mAs) value") of the radiation beam 6 and hence the level of exposure of the breast 8 to the x-ray beam 6.

It will be appreciated that an x-ray tube 4 comprises an electrical cathode at which electrons are generated and a target anode which when impacted by accelerated electrons emits the x-rays which make up the x-ray beam 6. Controlling the power supply 26 to vary the voltage between the cathode and the anode effects the energy of the emitted x-rays whereas controlling the power supply 26 to vary the current affects the x-ray fluence. Thus the total x-ray beam flux (or dose) provided by the tube 4 may be varied by varying the duration and/or magnitude of the supplied current (mAs value).

Additionally, or alternatively the control unit 24 may provide a control signal to the sampling unit 16 at a predetermined time. The sampling unit 16 is then adapted to generate and output a digital data set upon receipt of the control signal, that is after a predefined exposure time of the breast 8 to the beam 6.

In use the control unit 24 provides a first control signal to the power supply 26 which, in response, supplies current to the x-ray source 4 to generate an x-ray beam 6 having a first dose and energy. The x-ray photons incident on the imaging surface 12 and detected by the detector 14 produces, via the sampling unit 16, a first digital data set representative of an image of the breast 8 obtained at a first exposure level. The first digital data set is output from the sampling unit 16 to be received and stored in the memory 18 (for example RAM, ROM, fixed or removable storage media) of the computer system 22. The control unit 24 then provides a second control signal, which may or may not be generated automatically dependent on the first, to the power supply 30 which in response, supplies current to the x-ray source 4 to generate an x-ray beam 6 having a second dose and the same energy. The x-ray photons incident on and detected by the detector 14 produces a second digital data set representative of an image of the breast 8 obtained at a second exposure level. This second digital data set is again output from the sampling unit 16 to be received and stored in the memory 18 of the computer system 22.

A second embodiment of the present invention is shown in Fig. 1 by the broken line connection between the sampling unit 16 and the control unit 24. In use, the x-ray source 4 generates a beam 6 to irradiate the breast 8 with a single dose of x-rays. The control unit 24 operates during this irradiation to cause the sampling unit 16 to generate and output first and second digital data sets at two different times. The first and the second digital data sets thus generated each represent an image of the breast 8 obtained at respectively the first exposure level and the second exposure level. It will be appreciated by those skilled in the art that a second radiation detector and processing unit combination, identical to the first 14,16 shown in Fig. 1, can be provided. The control unit 24 may then be adapted to control the first and the second combinations sequentially to acquire the first and the second digital data sets at the two different times.

It will be further appreciated by those skilled in the art that since the attenuation properties of a subject breast 8 vary with x-ray beam energy it is important that the beam energy is kept substantially constant during the acquisition of both the first and the second digital data sets.

Irrespective of how the first and the second digital data sets are generated the image processing unit 20 then operates, as discussed more fully below, to identify in each of the generated data sets a reduced data set representative of a region of the breast 8 which was imaged with adequate contrast information. Because of the variations in thickness and thus in the absorption properties of the compressed breast 8 each region will be different for each exposure level. The extracted data from each of the digital data sets is then combined within the image processing unit 20 to produce a final data set representing an image of the breast 8 which contains enhanced contrast information as compared to the images represented by either of the first or the second digital data sets. This final data set may stored within the memory 18 of the computer system 22 and may be suitably processed within the computer system 22 into a video signal which when supplied to the display screen 26 causes a visible image to be reconstructed for viewing and analysis.

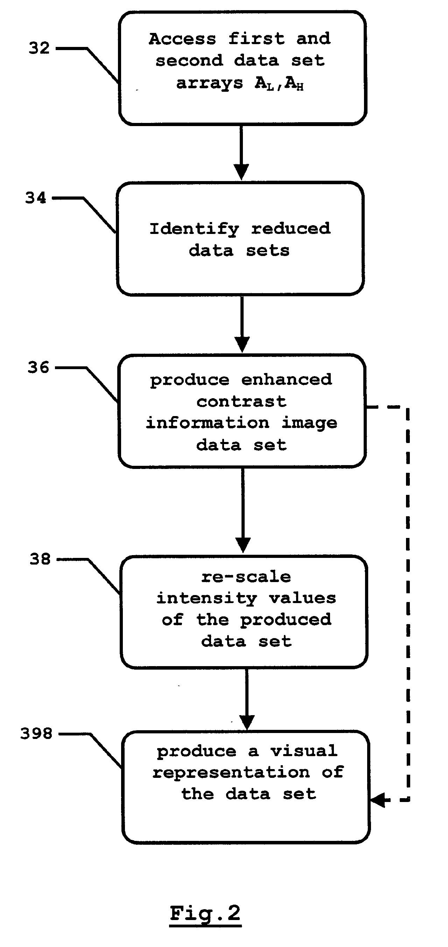

In use, a program code portion of a computer software product is loaded into the memory 18 and run by the computer system 22 to cause the image processing unit 20 to operate according to the flow diagram of Fig. 2.

For ease of explanation it is assumed that the first exposure level is a relatively low level which is used to generate the first digital data set. The second exposure level is then a relative high level with these levels being here selected according to the automatic exposure control technique described below and generates the second digital data set. Thus the first digital data set will comprise contrast information on a thinner region of the imaged breast 8 and the second digital data set will comprise information a relatively thicker region of the imaged breast 8. It will also be assumed that an intensity value of 4000 in any element of the digital data sets represents a saturation value for the x-ray mammography system of Fig. 1, that a value of O is the minimum intensity value and that N is the number of array elements which make up each data set.

At step 32 the first data set, being an array A_{L}(1..N) and the second data set, being a corresponding array A_{H}(1..N), are accessed by the image processing unit 20. Each index number 1..N of the array A_{L} corresponds to a pixel (or detector array element) of the detector 14, the spatial location of which in the imaging surface 12 of the detector 14 has been provided within the computer system (22).

At step 34 a reduced data set is identified within each of the data set arrays A_{L}, A_{H} accessed at step 32. Each reduced data set represents different thickness regions of the imaged breast selected based on the contrast information (equivalent to intensity value variations) held.
In the present example this is achieved through a step-wise comparison of intensity values in corresponding array elements in each array, A_{L}, A_{H} to identify which of those array elements A_{L}(1..N) of the first data are unsaturated where the array element A_{H}(1..N) of the second data set having a corresponding spatial location in the image (here evidenced by having the same index number) is saturated. To do this the array elements A_{L}(1..N) of the first array A_{L} are compared to a predetermined saturation threshold value, delimiting one or more intensity values which represent saturation, to see which fall outside this "saturation range" as delimited by the threshold value whilst the corresponding array elements A_{H}(1..N) of the second array A_{H} fall within the saturation range.

Thus, in the present example, the saturation threshold value may be set to 4000 (producing a saturation range of one); the contents of array element A_{H}(1) then checked to see if it has a value of 4000; if it has then the contents of corresponding array element A_{L}(1) is checked and if this has a value of less than 4000 the index number (1) of those elements is stored; this is repeated for all remaining elements (2..N). This effectively locates the thinnest parts of the imaged breast. The reduced data set identified from within the array A_{H} is then all the array elements the index numbers of which are NOT stored. The reduced data set identified from within the array A_{L} is all the array elements the index numbers of which ARE stored. It will be appreciated that a saturation threshold value different to the maximum saturation value of 4000 may be employed in this step 34 to set a lower limit for a saturation level so as to ensure that the reduced data sets will contain the contrast information of interest. This threshold value may be selected dependent on the lower exposure level value which effectively determines the contrast detail in the thinner regions of the breast 8 being imaged and can be, for example, selected after an empirical rule set based on calibration using subjects of known thickness and data sets obtained at known exposure levels. Indeed the saturation threshold values used in the comparisons may be different for each data set, such as for example where a lower exposure level is used at which even those pixels outside the breast region (that is those directly illuminated by the x-ray beam without it passing through breast tissue) do not become fully saturated.

At step 36 an enhanced contrast information image data set is produced as a combination of the reduced data sets. identified at step 34.

This may be achieved by substituting the intensity values of those array elements of the higher exposure level array, A_{H}, the index numbers (1..N) of which are stored at step 34 with the intensity values of the array elements with corresponding index numbers (1..N) extracted from the lower exposure level array, A_{L}.

A step 38 is preferably included at which step the intensity values held in the enhanced contrast information image data set produced at step 36 are re-scaled to remove the abrupt change in intensity level values of the so produced array which corresponds to the "boundary" in that array between array elements from each of the two arrays A_{L}, A_{H} accessed at step 32.

This may be achieved in the present example simply by adding the saturation level value, here 4000, to the intensity values of those array elements of the lower exposure level array A_{L} which constitute the reduced data set employed at step 36. This effectively increases the dynamic range of the system of Fig. 1 from 0-4000 to 0-8000.

A step 39 may be included at which the enhanced contrast information image data set, preferably produced at step 38, is converted to a video signal which is employed to drive a display device to display a visual reconstruction of the image represented by the data set.

It will be appreciated that some or all of the program code portion of the computer software product may be additionally or alternatively run by a computer system 52 (see Fig. 1) at a location remote from the site at which the images of the breast 8 are generated. A remote link (illustrated by the broken arrow in Fig. 1) needs to be provided to allow access to the first and the second data sets at the equivalent step 32.

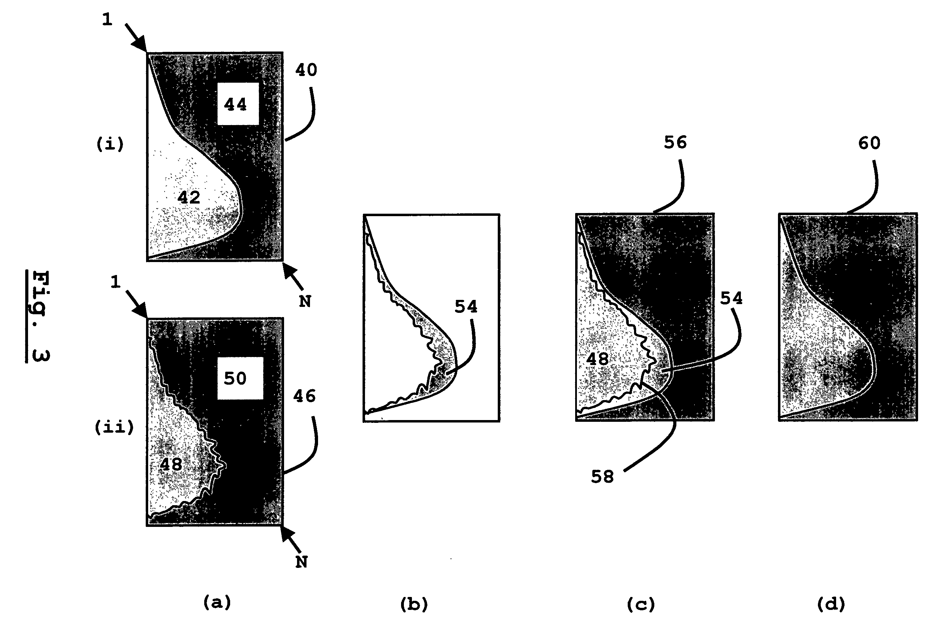

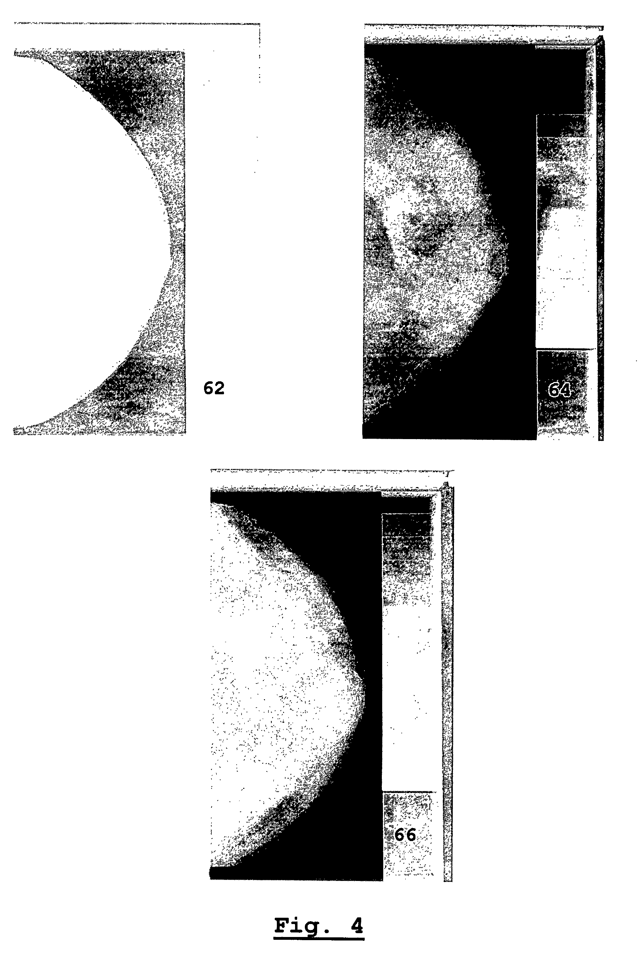

The method according to the present invention and as implemented when the program code portion described above is run is represented graphically at Figs. 3 (a) to (d) with actual images corresponding to the graphical representations Fig. 3(a) and Fig. 3(d), obtained using a system similar to that of Fig 1. shown in Fig. 4.

Considering Figs. 3, a visual image 40 reconstructed from the representative digital data set A_{L} (1..N) is represented in Fig. 3 (a)(i). The locations of the first pixel (1) and the last pixel (N) of a generally rectangular imaging surface (12 of Fig. 1) of a digital radiation detector (14 of Fig. 1) are also shown. The visual image 40 comprises a region 42 representing an imaged breast, and a region 44 of substantially uniform intensity, representing a saturated region.

Fig. 3 (a)ii shows a visual image 46 similarly reconstructed from the digital data set A_{H} (1..N). As can be seen the visual image 46 comprises a region 48 also representing the imaged breast, but which is less extensive than that region 42 of the image 40 shown in Fig 3(a)(i). A region 50 represents a saturated region.

The data sets A_{L} and A_{H} are those accessed at step 32 above.

As is shown in Fig 3.(b) an area 54 can be identified within the imaged breast region 42 of the image 40 shown in Fig. 3(a)(i) where the intensity values of the corresponding array elements A_{L}(1..N) are not equal to the saturation intensity value but where, in the second image 46 shown in Fig 3(a)(ii), those array elements A_{H}(1..N) representing the same location within that second image 46 have a value equal to the saturation value. From this identified area 54 a reduced data set from within each of the original data sets A_{L}, A_{H} can be identified in a manner described with regard to step 34 above. These two identified reduced data sets can then be combined to form an enhanced contrast information image data set as described with regard to step 36 above. This data set when reconstructed produces an image 56 as shown in Fig. 3(c). As can be seen the image 56 contains an abrupt boundary 58 between the area 54 of Fig 3(b), which corresponds to a peripheral (or 'skinline') portion of the imaged breast region 42 of the image 40 shown in Fig. 3(a)(i), and the imaged breast region 48 of the image 46 shown in Fig. 3(a)(ii). Moreover, contrary to what a physician normally carrying out interpretations of mammographic images would expect, the area 48 is generally lighter (smaller intensity values) than the remaining imaged breast region 44. In order to reduce the visual impact of the boundary 58 and to produce an image 60 of the breast having an 'expected' general contrast variation re-scaling of the intensity values of the enhanced contrast information image data set according to the step 38 described above, is preferred. The re-scaling produces an enhanced contrast information image data set which, when reconstructed provides a visual image 60 as illustrated in Fig. 3(d).

Considering now Figs 4, an actual mammographic image 62 obtained at an exposure level of 5 mAs is shown and corresponds to the graphical image 40 shown in Fig. 3 a(i).

As can be seen the majority of the imaged breast is white which indicates under exposure and only a thin region (skinline) about the periphery of the breast contains useful image contrast information. An actual mammographic image 64 obtained at an exposure level of 120 mAs is also shown and corresponds to the graphical image 46 shown in Fig. 3 (a)(ii). As can be seen useful contrast information is present in the majority of the imaged breast which corresponds to the white region of the imaged breast in the image 62 obtained at 5 mAs. The skinline contrast information contained in that image 62 has however been lost and has become black. This indicates saturation or over exposure of the image 64 in this skinline region. An image 66 is shown which is a visual re-construction of the enhanced contrast information image data set, after re-scaling, and corresponds to the graphical image 60 of Fig. 3 (d).

### Automatic Exposure Control (AEC)

The technique of AEC of a digital imaging system is well known. The application of AEC in a digital transmission x-ray mammography system is disclosed in, for example, US 6018565. Here a first digital data set, representing first image obtained at a first, typically lower, exposure level, is analysed (with or without background data removed)using histogram analysis to determine an average grey scale value. A new, second, typically higher, exposure level is then calculated using this average value which will produce a second image with a contrast information optimised for the subject 8.

According to the present invention, exemplified by the description of Fig. 1, the power supply 30 is controlled to supply to the source 4 a current with a first mAs value with which is generated the first digital data set, representative of an image of the breast 8 obtained at the first exposure level. This first mAs value is selected to provide adequate contrast information about the periphery of the breast (that is in thinner regions) and constitutes the lower of the two exposure levels. This can be done manually via the interface 28 or automatically dependent on the thickness of the compressed breast as measured, for example, by the distance of the compression plate 10 from the detector imaging surface 12. Look up tables of mAs value versus thickness can be stored within the memory 18 of the computer system 22 for access by the control unit 24. The image processor 20 then undertakes histogram analysis of the first digital data set and AEC is provided by the control unit 24 which controls the power supply 30 to supply a second mAs value to the x-ray source 4 with which is generated the second digital data set, representative of an image of the breast 8 obtained at the second, higher, exposure level.

It will be appreciated by those skilled in the art that the higher exposure level may be used to set the mAs value for the lower exposure level. However, it is preferable to set the higher exposure level using the lower exposure level, as described above, so as to minimise the x-ray dose received by the subject 8.

## Claims

1. A method of generating an enhanced contrast information image digital data set of a subject (8) comprising the steps of:
receiving into a digital signal processor (18,20) a plurality of digital data sets (A_{L}; A_{H}) each representing an image (40,62;46,64) of the subject (8) at a different one of a plurality of associated exposure levels;
identifying within the digital signal processor (18,20) a reduced digital data set in each of the plurality of received digital data sets (A_{L}; A_{H}), each reduced digital data set representing a different region of the imaged subject selected dependent on the associated exposure level; and
combining the identified reduced digital data sets to generate the enhanced contrast information image digital data set.

2. A method as claimed in claim 1 **characterised in that** there is further provided the steps of
illuminating the subject (8) with two successive radiation beams (6) having differing durations and substantially identical energies;
detecting a spatial intensity distribution of each beam (6) after its interaction with the subject (8); and
generating from the detected spatial intensity distributions a first (A_{L}) and a second (A_{H}) digital data set of intensity values indexed with spatial location in respectively a first (40;62) and a second (46;64) image of the subject (8) for receipt into the digital signal processor (18,20) as the plurality of digital data sets.

3. A method as claimed in claim 1 **characterised in that** there is further provided the steps of:
illuminating the subject with a radiation beam (6);
detecting a spatial intensity distribution of the beam (6) after its interaction with the subject (8) at two successive time intervals to produce respectively a first (40) image and a second image (46); and
generating a first (A_{L}) and a second (A_{H}) digital data set of intensity values indexed with spatial location in respectively the first (40) and the second (46) image for receipt into the digital signal processor (18,20) as the plurality of digital data sets.

4. A method as claimed in claim 2 or claim 3 **characterised in that** the step of identifying the reduced digital data set in each of the first (A_{L}) and the second (A_{H}) digital data sets comprises the step of comparing a first intensity value from the first (A_{L}) digital data set and a second intensity value from the second (A_{H}) digital data set indexed with a same spatial location in each set (A_{L}; A_{H}) with a threshold saturation value to determine if one of the first and second the second intensity values indicates saturation while the other of the first and the second intensity values does not indicate saturation.

5. A computer software product comprising a program code portion stored on a computer readable medium and loadable into a memory (18) of a computer system (22) which code portion when run on the computer system (22) causes the system (22) to perform:
a step (32) of accessing a first (A_{L}) digital data set of intensity values indexed with a spatial location in a first image (40;62) of a subject (8) generated at a first exposure level, and accessing a second (A_{H}) digital data set of intensity values indexed with spatial location in a second image (46;64) of the subject (8) generated at a second, different exposure level;
a step (34) of identifying a reduced digital data set for each of the first A_{L} and the second A_{H} digital data sets, each reduced data set representing a different region (48,54) of the imaged subject (8) selected dependent on the associated exposure level; and
a step (36) of combining the identified reduced data sets to generate a data set representing an enhanced contrast information image (56;60;66).

6. A computer software product as claimed in claim 5 **characterised in that** the software code portion is adapted to cause the computer system to perform the step of identifying the reduced data sets (34) by:
comparing a first intensity value from the first (A_{L}) digital data set and a second intensity value from the second (A_{H}) digital data set indexed with a same spatial location in each set (A_{L}; A_{H}) with a saturation threshold value to determine if one of the first and second the second intensity values indicates saturation while the other of the first and the second intensity values does not indicate saturation.

7. A digital imaging system (2) comprising:
a digital image generator having a radiation source (4) for illuminating a subject (8) with a radiation beam (6) and a data acquisition system (12,14,16) located to detect the illuminating radiation after its interaction with the subject (8) to generate an image of the subject (8) and to output a digital data set representing the image;
**characterised in that**
the digital image generator (4,12,14,16) is operable to provide a first digital data set (A_{L}) representing an image (40;62) of the subject (8) generated at a first exposure level and a second digital data set (A_{H}) representing an image (46;64) of the subject generated at a second exposure level; and **in that**
the digital imaging system (2) further comprises a digital image processor (18,20) connectable to the digital image generator (4,12,14,16) to receive the first (A_{L}) and the second (A_{H}) digital data sets and configured to generate a third digital data set comprising data extracted from each of the first (A_{L}) and the second (A_{H}) data sets selected as representing regions of different radiation absorbency of the subject (8) dependent on the respective first and second exposure levels.

8. A digital imaging system (2) as claimed in claim 7 **characterised in that** the digital image processor (18,20) consists of a computer system (22) arranged to run a software code portion of a computer software product as claimed in any of the claims 5 and 6.

9. A digital imaging system as claimed in claim 7 or claim 8 **characterised in that**
the radiation source (4) is controllable to illuminate the subject (8) with two successive radiation beams of substantially identical energy and different durations to provide respectively the first and the second exposure levels.

10. A digital imaging system (2) as claimed in any of the claims 7 to 9 **characterised in that**
the radiation source consists of an x-ray source (4); **in that**
the data acquisition system (12,14,16) is arranged to detect x-ray radiation after its transmission through the subject; and **in that**
there is further provided a compression device (10) configured and disposed to locate a patient's breast (8) with respect to the x-ray source (4) and the data acquisition system (12,14,16) so as to act as the subject.
